# EUROPÄISCHE PATENTSCHRIFT

(11) **EP 2 541 708 B1**
(45) Veröffentlichungstag und Bekanntmachung des Hinweises auf die Patenterteilung: **01.04.2020**
(21) Anmeldenummer: 12167826.2
(22) Anmeldetag: 14.05.2012
(51) Int. Cl.: H02G 3/18, H02G 3/14

(54) **Unterflurkassette für elektrische Installationsgeräte**
Under-floor cartridge for electric installation devices
Cassette souterraine pour appareils d'installation électriques

(30) Priorität: 01.07.2011 DE 102011078509
(43) Veröffentlichungstag der Anmeldung: 02.01.2013
(73) Patentinhaber: OBO Bettermann GmbH & Co. KG, 58710 Menden (DE)
(72) Erfinder: Ruhr, Siegfried, 51674 Wiehl (DE); Raschke, Jörg, 51674 Wiehl (DE)
(74) Vertreter: Patentanwälte Ruff, Wilhelm, Beier, Dauster & Partner mbB

(56) Entgegenhaltungen:
- EP-A1- 1 357 653
- EP-A2- 1 667 299
- DE-A1- 1 615 595
- DE-A1- 4 234 751
- DE-A1-102009 004 578

## Beschreibung

Die Erfindung betrifft eine Unterflurkassette für elektrische Installationsgeräte mit einem Schnurauslasstubus in einem Deckel der Unterflurkassette, wobei der Schnurauslasstubus in einer Richtung senkrecht zu einer Oberfläche des Deckels relativ zum Deckel ausgezogen und eingeschoben werden kann, wobei der Schnurauslasstubus wenigstens einen verschiebbar am Deckel angeordneten Tubusring und einen verschiebbar am Tubusring angeordneten Tubusdeckel aufweist.

Aus der europäischen Offenlegungsschrift EP 0 648 000 A1 ist eine Unterflurgerätedose für nass zu reinigende Böden bekannt, die einen Schnurauslasstubus in einem auflappbaren Deckel aufweist. Der Schnurauslasstubus ist verschiebbar in dem Deckel angeordnet und kann in einer versenkten und einer ausgezogenen Stellung angeordnet und arretiert werden. Der Schnurauslasstubus selbst ist mit einem aufklappbaren Deckel versehen.

Aus der deutschen Offenlegungsschrift DE 42 34 751 A1 ist, siehe dort Figur 4, eine Unterflurkassette für elektrische Installationsgeräte mit einem Schnurauslasstubus in einem Deckel der Unterflurkassette bekannt, wobei der Schnurauslasstubus in einer Richtung senkrecht zu einer Oberfläche des Deckels relativ zum Deckel ausgezogen und eingeschoben werden kann. Der Schnurauslasstubus weist einen verschiebbar am Deckel angeordneten Tubusring und einen verschiebbar am Tubusring angeordneten Tubusdeckel auf. Der Tubusdeckel definiert in einer vollständig auf den Tubusring aufgeschobenen Stellung gemeinsam mit dem Tubusring etwa kreisrunde seitliche Öffnungen für das Durchführen von elektrischen Anschlusskabeln. Ausgehend von der vollständig eingeschobenen Stellung kann der Tubusdeckel nach oben vom Tubusring abgezogen werden, um das Einführen von Anschlusskabeln in den Tubusring und den Innenraum der Unterflurkassette zu ermöglichen.

Aus der europäischen Offenlegungsschrift EP 1 667 299 A2 ist eine Unterflurkassette für elektrische Installationsgeräte mit einem Schnurauslasstubus in einem Deckel der Unterflurkassette bekannt. Der Schnurauslasstubus kann in seiner Höhe dadurch verändert werden, dass ein Zwischenring in zwei unterschiedlichen, um 180° verdrehten, Stellungen an dem Schnurauslasstubus montiert wird.

Aus der deutschen Offenlegungsschrift DE 10 2009 004578 A1 ist ein Bodentank für Unterflurinstallationen bekannt. Der Bodentank weist ein Unterteil auf, dass auf einem Rohboden verankert wird und ein relativ zu dem Unterteil in seiner Höhe veränderbares Oberteil, das als Verschlussstopfen ausgebildet ist. Nach Einstellen einer Oberseite des Oberteils auf eine gewünschte Estrich-Höhe werden das Unterteil und das Oberteil mit Estrich umgossen. Nach dem Aushärten des Estrichs wird das Oberteil abgenommen, um Zugang zum Bodentank zu ermöglichen. Das Unterteil kann mit elastisch ausgebildeten oder durch Federkraft beaufschlagten Rasthaken versehen sein, die in Nuten oder Rillen an dem Oberteil eingreifen, um eine definierte, stufenweise Einstellung der Lage des Oberteils zum Unterteil zu ermöglichen.

Mit der Erfindung soll eine Unterflurkassette für elektrische Installationsgeräte verbessert werden.

Erfindungsgemäß ist hierzu eine Unterflurkassette für elektrische Installationsgeräte mit den Merkmalen von Anspruch 1 vorgesehen. Vorteilhafte Weiterbildungen der Erfindung sind in den Unteransprüchen angegeben. Es ist eine Unterflurkassette für elektrische Installationsgeräte mit einem Schnurauslasstubus in einem Deckel der Unterflurkassette vorgesehen, wobei der Schnurauslasstubus in einer Richtung senkrecht zu einer Oberfläche des Deckels relativ zum Deckel ausgezogen und eingeschoben werden kann, bei der der Schnurauslasstubus teleskopierbar ist und wenigstens einen verschiebbar am Deckel angeordneten Tubusring und einen verschiebbar am Tubusring angeordneten Tubusdeckel aufweist, wobei der Tubusdeckel Rastmittel aufweist, die in der vollständig ausgezogenen Stellung des Tubusdeckels den Tubusdeckel am Tubusring verrasten.

Durch diese Maßnahmen ist der Schnurauslasstubus selbst teleskopierbar und kann dadurch auf eine große Höhe ausgezogen werden, benötigt aber im zusammengeschobenen Zustand nur vergleichsweise wenig Platz. Die Unterflurkassette kann dadurch mehr Raum für elektrische Installationsgeräte unterhalb des Deckels zur Verfügung stellen. Dies ist beispielsweise von Bedeutung, wenn die Unterflurkassette in einen flachen Bodenaufbau eingebaut werden soll oder wenn hoch aufbauende Stecker, gegebenenfalls sogar 380 V Stecker, in Installationsgeräte in der Unterflurkassette eingesteckt werden sollen. Unter den Begriff Unterflurkassette fallen im Sinne der vorliegenden Erfindung auf sogenannte Unterflurgerätedosen mit Deckel.

In Weiterbildung der Erfindung ist der Tubusdeckel werkzeuglos abnehmbar am Tubusring angeordnet.

In überraschend einfacher Weise wird es dadurch ermöglicht, den vollen freien Querschnitt des Schnurauslasstubus zum Durchführen von Steckern nutzen zu können. Auf diese Weise kann die erfindungsgemäße Unterflurkassette beispielsweise auch zusammen mit 380 V-Steckern verwendet werden. Nicht der Tubusdeckel, sondern der freie Querschnitt des Tubusringes bestimmt dadurch den freien Durchgangsquerschnitt.

Erfindungsgemäß weist der Tubusdeckel mehrere, sich von einer Deckelfläche in Richtung auf den Tubusring erstreckende Vorsprünge auf, wobei zwischen den Vorsprüngen wenigstens eine Schnurauslassöffnung definiert ist und der Tubusdeckel mittels der Vorsprünge verschiebbar am Tubusring angeordnet ist.

Auf diese Weise kann mittels der mehreren Vorsprünge eine sichere Führung des Tubusdeckels am Tubusring erreicht werden. Gleichzeitig werden zwischen den Vorsprüngen mehrere Schnurauslassöffnungen definiert, die dann beispielsweise dazu verwendet werden können, mehrere Kabel in unterschiedlichen Richtungen vom Schnurauslasstubus wegzuführen.

In Weiterbildung der Erfindung ist der Tubusring wenigstens in seiner vollständig ausgezogenen Stellung mittels Rastmitteln relativ zum Kassettendeckel festlegbar.

Auf diese Weise kann der Tubusring in seiner ausgezogenen Stellung sicher arretiert werden. Im arretierten Zustand ist dadurch kein Einklemmen von Kabeln, Steckern oder dergleichen durch ein unbeabsichtigtes Zusammenschieben des Schnurauslasstubus möglich.

In Weiterbildung der Erfindung ist ein am Kassettendeckel festgelegter Stützring vorgesehen, an dem der Tubusring verschiebbar angeordnet ist.

Auf diese Weise kann ein modularer Aufbau des Schnurauslasstubus realisiert werden, da der Schnurauslasstubus mittels des Stützrings an unterschiedlichen Kassettendeckeln angeordnet werden kann.

In Weiterbildung der Erfindung ist wenigstens ein Distanzring vorgesehen, wobei der wenigstens eine Distanzring zwischen Kassettendeckel und Stützring angeordnet ist.

Auf diese Weise kann durch unterschiedlich hohe Distanzringe der Schnurauslasstubus an unterschiedlich hohe Bodenbeläge in einfacher Weise angepasst werden.

In Weiterbildung der Erfindung ist zwischen dem Stützring und dem Tubusring sowie zwischen dem Tubusring und dem Tubusdeckel jeweils ein elektrischer Schleifkontakt vorgesehen.

Auf diese Weise kann eine sichere Erdung der verschiebbar aneinander angeordneten Bauteile auch ohne eine Kabelverbindung der Bauteile erzielt werden. Ein elektrischer Schleifkontakt kann dabei die Anforderungen an den Übergangswiderstand der einzelnen Bauteile sicher erfüllen.

In Weiterbildung der Erfindung ist am Tubusdeckel oder am Stützring eine umlaufende Dichtung vorgesehen, die wenigstens im vollständig eingeschobenen Zustand des Tubusdeckels eine Abdichtung zwischen Tubusdeckel und Stützring bewirkt.

In Weiterbildung der Erfindung ist am Tubusring oder am Stützring eine umlaufende Dichtung vorgesehen, die wenigstens im vollständig ausgezogenen Zustand des Tubusrings eine Abdichtung zwischen Stützring und Tubusring bewirkt.

Durch diese Maßnahmen kann eine Abdichtung gegen eindringendes Wasser bereitgestellt werden, die im vollständig eingeschobenen Zustand bzw. vollständig ausgezogenen Zustand zuverlässig wirkt. Dadurch kann die erfindungsgemäße Unterflurkassette auch für nass zu reinigende Böden eingesetzt werden.

In Weiterbildung der Erfindung ist die umlaufende Dichtung in einer kegelförmigen Fläche des Tubusdeckels, des Tubusrings oder des Stützrings angeordnet.

Die Anordnung der umlaufenden Dichtung in einer kegelförmigen Fläche erlaubt eine sichere Abdichtung und gleichzeitig einen Ausgleich von eventuellen Toleranzen. Darüber hinaus wird ein sicherer, wackelfreier Sitz der einzelnen Bauteile aneinander erzielt.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Ansicht auf eine erfindungsgemäße Unterflurkassette von schräg oben,
- Fig. 2: eine Schnittansicht einer erfindungsgemäßen Unterflurkassette,
- Fig. 3: eine Ansicht des Schnurauslasstubus der Unterflurkassette der Fig. 1 im vollständig ausgezogenen Zustand,
- Fig. 4: eine Schnittansicht des Schnurauslasstubus der Fig. 3,
- Fig. 5: eine Ansicht des Schnurauslasstubus der Fig. 3 bei abgenommenem Deckel,
- Fig. 6: eine Ansicht des Schnurauslasstubus der Fig. 3 im eingeschobenem Zustand und abgenommenem, aber noch dargestellten Tubusdeckel,
- Fig. 7: eine Schnittansicht des Stützrings und des Tubusrings der Fig. 5 im ausgezogenen Zustand,
- Fig. 8: eine Ansicht des Tubusrings von schräg oben,
- Fig. 9: eine Ansicht des Stützrings von schräg oben,
- Fig. 10: eine abschnittsweise Ansicht des Schnurauslasstubus der Fig. 3 im vollständig ausgezogenen Zustand,
- Fig. 11: eine Schnittansicht des Schnurauslasstubus der Fig. 10 im vollständig eingeschobenen Zustand,
- Fig. 12: eine geschnittene Darstellung des Schnurauslasstubus der Fig. 3 im vollständig ausgezogenen Zustand von schräg oben,
- Fig. 13: eine Darstellung des Stützrings und des Tubusrings des erfindungsgemäßen Schnurauslasstubus beim Einführen eines Elektrosteckers,
- Fig. 14: den Deckel des Schnurauslasstubus der Fig. 3 von schräg oben,
- Fig. 15: den Deckel der Fig. 14 in einer Seitenansicht,
- Fig. 16: den Deckel der Fig. 14 von schräg unten,
- Fig. 17: den Tubusdeckel der Fig. 14 von unten,
- Fig. 18: den Tubusdeckel der Fig. 16 im teilweise zerlegten Zustand,
- Fig. 19: den Tubusdeckel der Fig. 17 im teilweise zerlegten Zustand,
- Fig. 20: die Rastschieber des Tubusdeckels der Fig. 14 in einer Ansicht von schräg unten,
- Fig. 21: eine vergrößerte Darstellung von zwei Rastschiebern aus Fig. 20 von schräg unten,
- Fig. 22: einen der Rastschieber der Fig. 20 von schräg unten und
- Fig. 23: den Rastschieber der Fig. 22 von schräg oben.

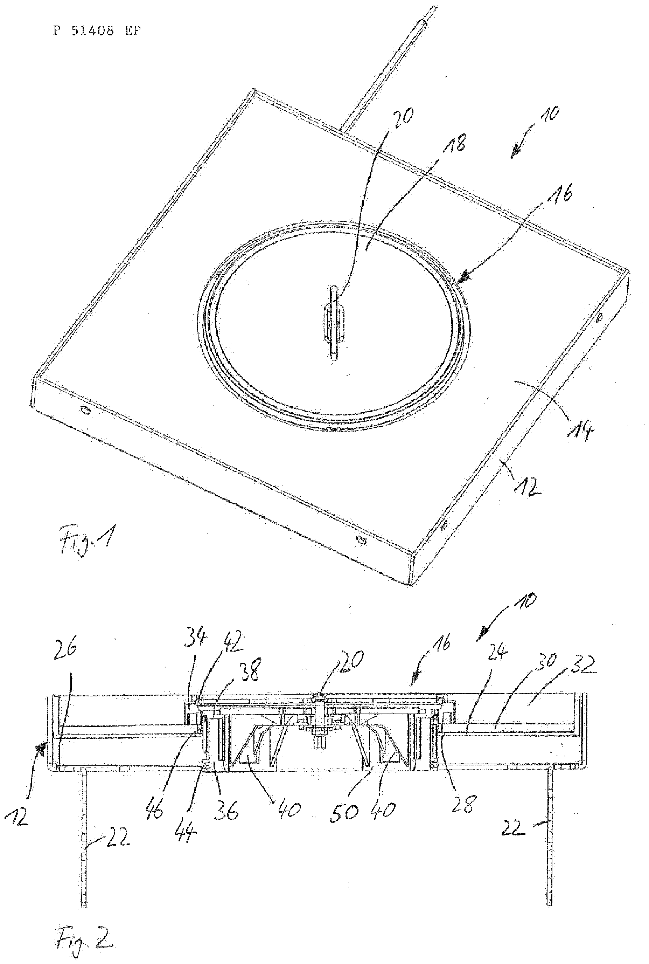

Die Darstellung der Fig. 1 zeigt eine erfindungsgemäße Unterflurkassette 10 von schräg oben. Die Unterflurkassette 10 weist ein Gehäuse 12 auf, von dem in der Ansicht der Fig. 1 lediglich eine äußere Umrahmung erkennbar ist. Weiter weist die Unterflurkassette 10 einen Deckel 14 auf, der abnehmbar auf das Gehäuse 12 aufgelegt ist. In dem Deckel 14 ist mittig ein Schnurauslasstubus 16 angeordnet. Der Schnurauslasstubus 16 ist in der Darstellung der Fig. 1 im eingeschobenen Zustand dargestellt, in dem eine Oberseite des Tubusdeckels 18 mit der Oberseite eines Bodenbelags in dem, den Schnurauslasstubus 16 umgebenden Bereich des Deckels 14 angeordnet ist. Der Tubusdeckel 18 ist mit einem ausziehbaren U-Bügel 20 versehen. Um den Schnurauslasstubus 16 von der in Fig. 1 dargestellten eingeschobenen Stellung in seine vollständig ausgezogene Stellung zu bringen, kann ein Benutzer zunächst den U-Bügel 20 ergreifen, diesen ein Stück ausziehen und dann an dem U-Bügel 20 den Schnurauslasstubus 16 ausziehen. Durch Drehung des U-Bügels 20 können dann auch die verschiedenen Bauteile des Schnurauslasstubus 16 gegeneinander verrastet werden, wie nachfolgend noch erläutert wird.

In der Darstellung der Fig. 2 ist die Unterflurkassette 10 in einer Schnittansicht dargestellt. Das Gehäuse 12 weist zwei Rastleitern 22 auf, die einander gegenüberliegen und die sich von einer Oberseite des Gehäuses 12 weg nach unten erstrecken. Die Rastleitern 22 sind dafür vorgesehen, sogenannte Gerätebecher einzuhängen, in denen dann Installationsgeräte, beispielsweise Energie- oder Datensteckdosen oder Überspannungsschutzgeräte, angeordnet werden. Alternativ kann in die Rastleitern 22 ein Halterahmen eingesetzt werden, an dem dann wiederum die Installationsgeräte angeordnet werden.

In das Gehäuse 12 ist der Deckel 14 eingesetzt, der eine Deckelschale 24 aufweist, die insbesondere als Blechteil ausgebildet ist und die in ihren Außenabmessungen auf die Innenabmessungen des Gehäuses 12 abgestimmt ist. In der Fig. 2 ist zur Verdeutlichung die Deckelschale 24 mit einer geringeren Höhe als das Gehäuse 12 dargestellt. Üblicherweise liegt der in Fig. 2 unten liegende Boden der Deckelschale 24 auf einem umlaufenden Rand 26 des Gehäuses 12 auf. Die Deckelschale 24 weist eine mittig angeordnete, etwa kreisrunde Ausnehmung 28 auf, in die der Schnurauslasstubus 16 eingesetzt ist. Die Deckelschale 24 ist mit einer Einlegeplatte 30 versehen, die auf die Innenabmessungen der Deckelschale 24 abgestimmt ist und die ebenfalls eine kreisrunde, mittige Ausnehmung aufweist. Die Einlegeplatte 30 dient zur Verstärkung der Deckelschale 24 und auch dazu, die Innenhöhe der Deckelschale 24 exakt auf die Höhe eines einzulegenden Bodenbelags 32 zu verringern. Der Bodenbelag 32 weist ebenfalls eine mittige, kreisrunde Ausnehmung auf, innerhalb der der Schnurauslasstubus 16 angeordnet ist.

Der Schnurauslasstubus 16 selbst weist einen Stützring 34 auf, der fest an der Deckelschale 24 bzw. an der Einlegeplatte 30 befestigt ist. In diesem Stützring 34 ist verschiebbar ein Tubusring 36 angeordnet, der ausgehend von der in Fig. 2 dargestellten Lage relativ zur Deckelschale 24 nach oben hin ausgezogen werden kann. An dem Tubusring 36 ist verschiebbar ein Tubusdeckel 38 angeordnet, der ausgehend von der in Fig. 2 dargestellten Lage relativ zum Tubusring 36 nach oben verschoben werden kann. Der Tubusdeckel 38 weist insgesamt vier radial nach außen bzw. innen verlagerbare Rastvorsprünge 40 und Führungsarme 50 auf, von denen in Fig. 2 lediglich zwei erkennbar sind und die für eine Führung des Tubusdeckels 38 am Tubusring 36 sorgen und die in der vollständig ausgezogenen Stellung des Tubusdeckels 38 diesen am Tubusring 36 in seiner Endstellung verrasten.

Beim Ausziehen des Schnurauslasstubus 16 wird der Tubusdeckel 38 an dem Griffbügel 20 ergriffen und in der Darstellung der Fig. 2 nach oben gezogen. Dadurch verschiebt sich der Tubusdeckel 38 relativ zum Tubusring 36 und der Tubusring 36 relativ zum Stützring 34. Der Schnurauslasstubus 16 wird dadurch nach Art eines Teleskops ausgezogen.

Der Tubusdeckel 38 ist an seinem Außenumfang mit einer umlaufenden Dichtung 42 versehen, die im vollständig eingeschobenen Zustand des Schnurauslasstubus 16 an einer Innenwandung des Stützrings 34 anliegt und dadurch verhindert, dass Wasser und Schmutz zwischen Stützring 34 und Tubusdeckel 38 eindringen können. Die umlaufende Dichtung 42 ist unmittelbar unterhalb einer Oberseite des Tubusdeckels 38 und damit auch einer Oberseite des Bodenbelags 32 angeordnet. Die umlaufende Dichtung 42 ist als O-Ring mit kreisförmigem Querschnitt ausgebildet und ist zwischen zwei zueinander passenden kegelförmigen Flächen des Tubusdeckels 38 bzw. des Stützrings 34 angeordnet.

Der Tubusring 36 ist an seinem unteren Ende ebenfalls mit einer umlaufenden Dichtung 44 versehen. Im vollständig ausgezogenen Zustand des Tubusrings 36 liegt die umlaufende Dichtung 44 an einer ebenfalls kegelförmigen Anlagefläche 46 des Stützrings 34 an und verhindert dadurch auch im ausgezogenen Zustand, dass Wasser und Schmutz in den Innenraum der Unterflurkassette 10 eindringen können.

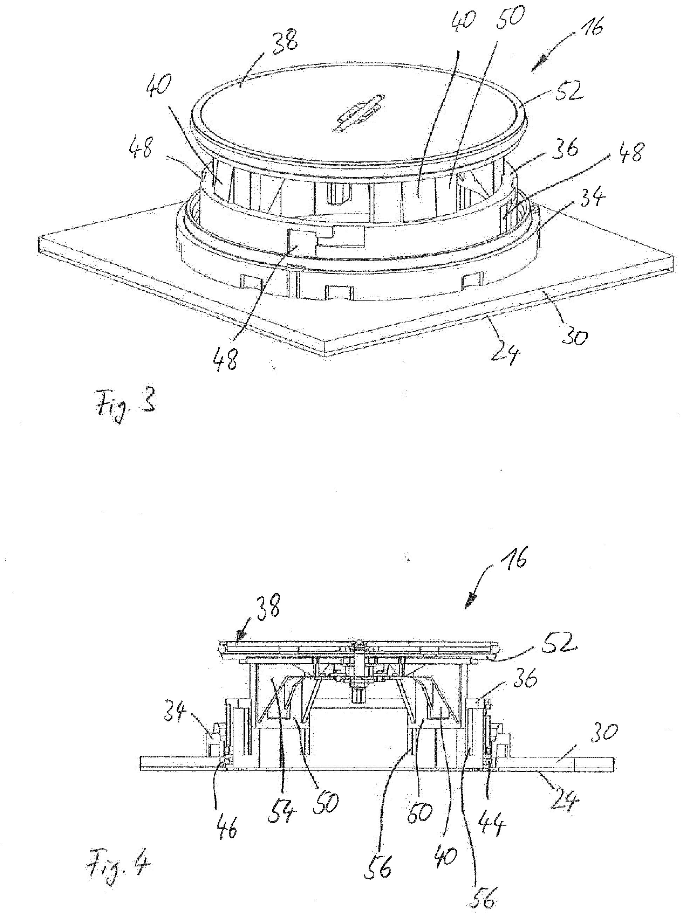

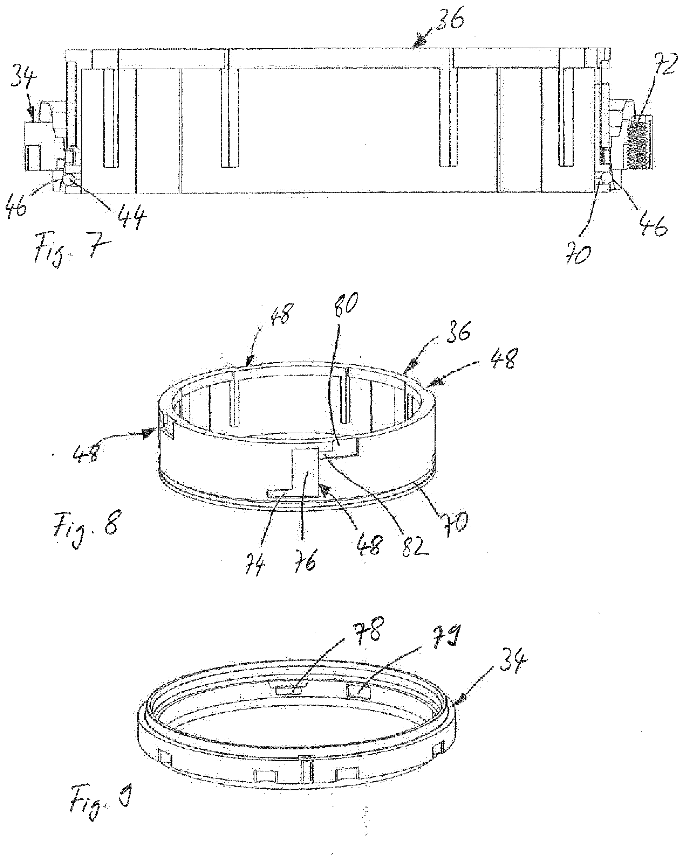

Die Darstellung der Fig. 3 zeigt nur den Schnurauslasstubus 16 mit einem Abschnitt der Deckelschale 24 und der Einlegeplatte 30 im vollständig ausgezogenen Zustand. Der Stützring 34 ist ja fest mit der Deckelschale 24 verbunden, beispielsweise mittels Schrauben. Der Tubusring 36 ist nun relativ zu der in Fig. 2 dargestellten Stellung zum Stützring 34 verschoben und ragt dadurch über die Oberseite des Stützrings 34 hinaus. In dieser ausgezogenen Stellung wird der Tubusring 36 durch eine Drehung gegen den Uhrzeigersinn in Fig. 3 verrastet. Um eine solche Verrastung zu ermöglichen, weist der Tubusring 36 über seinen Umfang verteilt mehrere vertiefte Führungen 48 auf, die in passende, nach innen vorragende Vorsprünge am Stützring 34 eingreifen. Die Führungen 48 weisen zwei in Umfangsrichtung des Tubusrings 36 verlaufende Abschnitte und einen diese beiden Abschnitte verbindenden vertikalen Abschnitt auf, wobei sich die beiden in Umfangsrichtung verlaufenden Abschnitte in entgegengesetzte Richtungen von dem vertikalen Abschnitt weg erstrecken. Die genaue Ausbildung der Führungen 48 ist in der Darstellung der Fig. 8 zu erkennen.

In der Darstellung der Fig. 3 ist auch der Tubusdeckel 38 in seiner vollständig ausgezogenen Stellung dargestellt. In dieser vollständig ausgezogenen Stellung liegen insgesamt vier Rastvorsprünge 40 auf einer Oberseite des Tubusrings 36 auf und halten den Tubusdeckel 38 dadurch in der in Fig. 3 dargestellten vollständig ausgezogenen Stellung. Die Rastvorsprünge 40 ragen jeweils durch Fenster in Führungsarmen 50 hindurch, die sich ausgehend von einer Deckplatte 52 des Tubusdeckels 38 senkrecht nach unten erstrecken und den Tubusdeckel 38 an dem Tubusring 36 führen.

Die Darstellung der Fig. 4 zeigt den Tubusdeckel 16 der Fig. 3 in einer Schnittansicht. Zu erkennen ist, dass in diesem vollständig ausgezogenen Zustand die umlaufende Dichtung 44 am Tubusring 36 an der kegelförmigen Fläche 46 des Stützrings 34 anliegt und dadurch verhindert, dass Schmutz oder Wasser zwischen Stützring 34 und Tubusring 36 in das Innere der Unterflurkassette gelangt. In der Darstellung der Fig. 4 sind zwei der Führungsarme 50 am Tubusdeckel 38 gut zu erkennen, wobei die Führungsarme 50 mittels jeweils zwei plattenförmigen Streben 54 mit der Deckelplatte 52 des Tubusdeckels 38 verbunden sind und dadurch mit der Deckelplatte 52 eine stabile Einheit bilden. Dadurch können die Führungsarme 50 den Tubusdeckel 38 in Längsrichtung zuverlässig am Tubusring 36 führen. In dem jeweiligen Fenster der Führungsarme 50 ist jeweils ein Rastarm 40 des Tubusdeckels 38 zu erkennen. Der Tubusring 36 ist mit leistenförmigen, nach innen vorragenden Vorsprüngen 56 versehen, die jeweils seitlich an einem Führungsarm 50 anliegen und dadurch dafür sorgen, dass der Tubusdeckel 38 relativ zum Tubusring 36 nur in axialer Richtung verschoben, nicht aber verdreht werden kann.

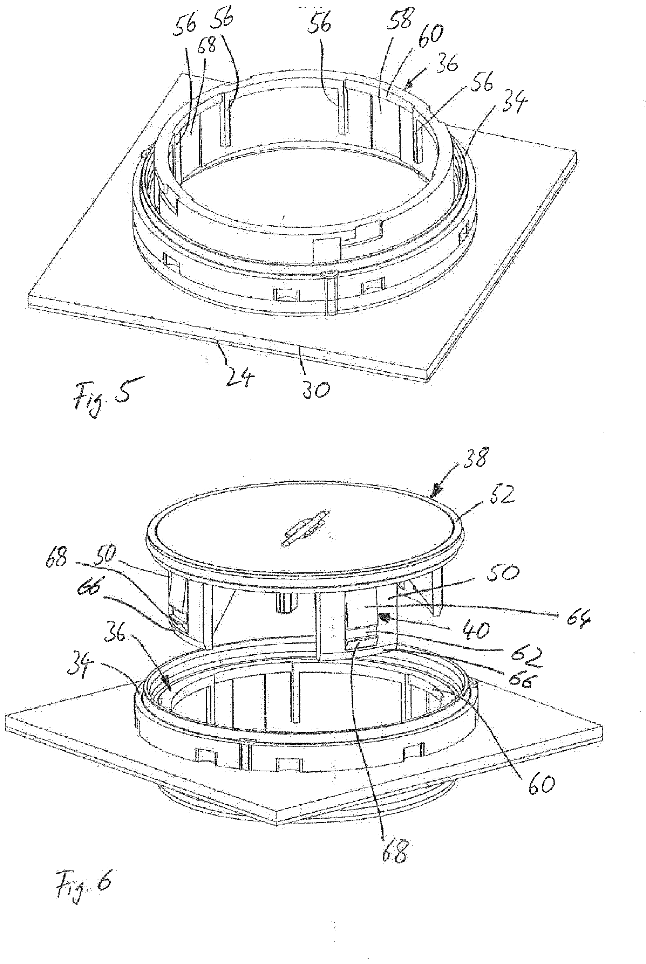

Die Darstellung der Fig. 5 zeigt abschnittsweise die Deckelschale 24 mit der Einlegeplatte 30 und dem an der Deckelschale 24 befestigten Stützring 34 sowie den in der ausgezogenen Stellung der Fig. 3 befindlichen Tubusring 36. Der Übersichtlichkeit halber ist der Tubusdeckel 38 in der Darstellung der Fig. 5 abgenommen und daher nicht gezeigt.

Der Tubusring 36 weist, wie erläutert wurde, insgesamt vier Paare an einander gegenüberliegenden leistenförmigen Vorsprüngen 56 auf, die eine Längsführung für die Führungsarme 50 des Tubusdeckels 38 bereitstellen, siehe Fig. 4. Mittig zwischen zwei leistenförmigen Vorsprüngen 56 ist jeweils eine Nut 58 angeordnet, die auf die Breite der Rastvorsprünge 40 am Tubusdeckel 38 abgestimmt ist, siehe beispielsweise Fig. 6. Zu dem in Fig. 5 oberen Ende hin sind die Nuten 58 jeweils durch den nach innen vorragenden, oberen Rand 60 des Tubusrings 36 abgeschlossen. Die Höhe dieses nach innen vorragenden oberen Randes 60 ist, siehe Fig. 6, auf die Höhe einer in Umfangsrichtung verlaufenden nutförmigen Ausnehmung 62 an den Rastvorsprüngen 40 am Tubusdeckel 38 abgestimmt.

Ausgehend vom vollständig eingeschobenen Zustand gleiten beim Herausziehen des Tubusdeckels 38 aus dem Tubusring 36 die Führungsarme 50 in den durch die beiden gegenüberliegenden leistenförmigen Vorsprünge 56 gebildeten Führungen. Die Rastvorsprünge 40 ragen in die Nut 58 am Tubusring 36 vor und werden dadurch geführt. Die Rastvorsprünge 40 weisen ausgehend von der nutförmigen Ausnehmung 62 nach oben, zur Deckelplatte 52 hin eine erste Anlaufschräge 64 auf und sind relativ zu den Führungsarmen 50 radial nach innen verlagerbar. Beim Hochziehen des Tubusdeckels 38 werden die Rastvorsprünge 40 dadurch radial nach innen gedrückt, bis die nutförmige Ausnehmungen 62 radial innerhalb des oberen Randes 60 des Tubusrings 36 angeordnet sind und dann durch die Vorspannung der Rastvorsprünge 40 radial nach außen einschnappen. Im eingeschnappten bzw. verrasteten Zustand ist der Rand 60 des Tubusrings 36 dann in der nutförmigen Ausnehmung 62 an den Rastvorsprüngen 40 aufgenommen. Der Tubusdeckel 38 ist dadurch sowohl gegen ein weiteres Ausziehen nach oben als auch gegen ein Zurückdrücken nach unten gesichert.

Ausgehend von dem in Fig. 6 dargestellten abgenommenen Zustand des Tubusdeckels 38 wird dieser so auf den Tubusring 36 aufgesetzt, dass sich Abschrägungen 66 am jeweiligen unten und radial außen liegenden Ende der Führungsarme 50 auf der Oberseite der Randabschnitte 60 am Tubusring 36 befinden. Die Abschrägungen 66 erleichtern das Aufsetzen und Zentrieren des Tubusdeckels 38 relativ zum Tubusring 36. Ausgehend von dieser Stellung wird der Tubusdeckel 38 dann relativ zum Tubusring 36 nach unten gedrückt. Dadurch kommen zweite Anlaufschrägen 68 an den Rastvorsprüngen 40 in Anlage an die jeweils innen und oben liegende Kante der Randabschnitte 60 am Tubusring 36. Wird der Tubusdeckel 38 dann weiter nach unten gedrückt, werden auch die Rastvorsprünge 40 durch die Wirkung der zweiten Anlaufschrägen 68 radial nach innen verlagert. Sobald die nutförmigen Ausnehmungen 62 radial innerhalb der Randabschnitte 60 liegen, schnappen die Rastvorsprünge 40 dann wieder nach außen, um den Tubusdeckel 38 sicher am Tubusring 36 zu verrasten.

In der verrasteten Stellung ist der Tubusdeckel 38 sowohl in axialer Richtung als auch in Umfangsrichtung relativ zum Tubusring 36 festgelegt. Durch Drehung des Tubusdeckels 38 kann dadurch auch der Tubusring 36 relativ zum Stützring 34 verdreht und in axialer Richtung verschoben werden. Durch Drehung des Tubusdeckels 38 und axiale Verschiebung kann dadurch auch der Tubusring 36 relativ zum Stützring 34 ausgezogen werden und mittels der Kulissenführungen 48 in seine ausgezogene bzw. eingeschobene Stellung verbracht werden.

Zum Abnehmen des Tubusdeckels 38 müssen die Rastvorsprünge 40 radial nach innen gedrückt werden. Dies geschieht durch manuellen Druck radial nach innen. Die insgesamt vier Rastvorsprünge 40 sind miteinander gekoppelt, so dass das Eindrücken eines bzw. von zwei Rastvorsprüngen 40 radial nach innen gleichzeitig die radiale Verlagerung aller übrigen Rastvorsprünge 40 nach innen verursacht und dadurch den Tubusdeckel 38 freigibt.

Die Darstellung der Fig. 7 zeigt eine Schnittansicht, wobei lediglich der Stützring 34 und der Tubusring 36 im vollständig ausgezogenen Zustand dargestellt sind. In dieser Ansicht ist zu erkennen, wie die umlaufende Dichtung 44, die als O-Ring mit kreisförmigem Querschnitt ausgebildet ist, an der kegelförmigen Fläche 46 des Stützrings 34 anliegt und dadurch eine Abdichtung zwischen Stützring 34 und Tubusring 36 bereitstellt. Die umlaufende Dichtung 44 liegt in einer umlaufenden ringförmigen Ausnehmung 70 am unteren Ende des Tubusrings 36, die einen etwa halbkreisförmigen Querschnitt aufweist. Die Kegelfläche 46 am Stützring 34 erweitert sich in einer Richtung nach unten. Die Kegelfläche 46 sorgt dadurch für einen Ausgleich von Toleranzen und eine sichere Abdichtung zwischen Stützring 34 und Tubusring 36. In der Darstellung der Fig. 7 ist auch eine Gewindebohrung 72 am Stützring 34 zu erkennen. In die Gewindebohrung 72 werden Schraubbolzen in der Darstellung der Fig. 4 von unten her durch die Deckelschale 24 gesteckt und in die Gewindebohrung 72 eingeschraubt, um den Stützring 34 fest mit der Deckelschale 24 zu verbinden. Zwischen die Deckelschale 24 und den Stützring 34 können Distanzringe eingefügt werden, um die Höhe des Schnurauslasstubus 16 einstellen zu können.

Die Darstellung der Fig. 8 zeigt den Tubusring 36 in einer Ansicht von schräg oben. Am unteren Ende des Stützrings 36 ist die umlaufende Nut 70 für die Anordnung der umlaufenden Dichtung zu erkennen. Um den Außenumfang des Tubusrings 36 verteilt sind insgesamt vier Führungen 48. Die Führungen 48 weisen jeweils einen in Umfangsrichtung verlaufenden, unteren Abschnitt 74 und einen senkrecht zur Umfangsrichtung verlaufenden Mittenabschnitt 76 auf. Eine Höhe des ersten Abschnitts 74 und eine Breite des Mittenabschnitts 76 ist auf die Höhe bzw. Breite von Vorsprüngen 78 auf der Innenseite des Stützrings 34 abgestimmt, siehe Fig. 9. Wenn die Vorsprünge 78 in den ersten, in Umfangsrichtung liegenden Abschnitten 74 der Führung 48 angeordnet sind, ist der Tubusring 36 relativ zum Stützring 34 in axialer Richtung festgelegt. Der Tubusring 36 befindet sich dann in seiner vollständig ausgezogenen und am Stützring 34 verrasteten Stellung, wobei die Abschnitte 74 der Führungen 48 und die Vorsprünge 78 am Stützring 34 als Rastmittel wirken. Die Vorsprünge 78 können nur durch eine Drehung des Tubusrings 36 im Uhrzeigersinn aus den ersten Abschnitten 74 herausbewegt werden. Wenn dies geschieht, dann liegen die Vorsprünge 78 an dem in Fig. 8 unteren Ende der Mittenabschnitte 76. Ausgehend von dieser Stellung kann der Tubusring 36 dann axial nach unten relativ zum Stützring 34 verschoben werden, bis die Vorsprünge 78 an das jeweilige obere Ende der Mittenabschnitte 76 der Führungen 48 anschlagen. Wenn die Vorsprünge 78 an das obere Ende der Führungen 48 anschlagen, hat der Tubusring 36 seine vollständig eingeschobene Stellung erreicht.

Um den Tubusring 36 am Stützring 34 zu montieren, wird der Tubusring 36 von unten her in den in Fig. 9 dargestellten Stützring 34 eingesetzt. Der Tubusring 36 wird dabei so gedreht, dass ein dritter, senkrecht zur Umfangsrichtung verlaufender Abschnitt 80 der Führungen 48 genau unterhalb eines der Vorsprünge 78 angeordnet ist. Die Abschnitte 80 gehen bis zum oberen Rand des Tubusrings 36 und sind in ihrer Breite auf die Breite der Vorsprünge 78 abgestimmt. Wird der Tubusring 36 ausgehend von dieser Stellung dann nach oben gedrückt, rutschen die Vorsprünge 78 in die Abschnitte 80 der Führungen 48 hinein, bis sie an das untere Ende der Abschnitte 80 anschlagen. Ausgehend von dieser Stellung kann der Tubusring 36 dann relativ zum Stützring 34 entgegen dem Uhrzeigersinn verdreht werden, so dass die Vorsprünge 78 in vierte, in Umfangsrichtung verlaufende Abschnitte 82 hineinlaufen, die in ihrer Höhe auf die Höhe der Vorsprünge 78 abgestimmt sind. Ausgehend von dieser Stellung wird der Tubusring 36 dann weiter entgegen dem Uhrzeigersinn verdreht, bis die Vorsprünge 78 im oberen Bereich der Mittenabschnitte 76 der Führungen 48 ankommen und der Tubusring 36 damit verschiebbar am Stützring 34 montiert ist. In einer Richtung radial nach innen gesehen sind die Abschnitte 80 und 82 der Führungen 48 weniger tief als die Abschnitte 74 und 76. Der Tubusring 36 ist dadurch unverlierbar an dem Stützring 34 gesichert und lediglich durch bewusstes, kräftiges Drehen können die Vorsprünge 78 wieder in die vierten Abschnitte 82 der Führungen 48 gebracht werden, um dann erforderlichenfalls den Tubusring 36 wieder vom Stützring 34 zu trennen.

In der Darstellung der Fig. 9 ist auf der Innenseite des Stützrings 34 eine Vertiefung 79 zu erkennen, die im montierten Zustand des Schnurauslasstubus einen Schleifkontakt aufnimmt. Der Schleifkontakt liegt dann auf einer Außenseite des Tubusrings 36 an und sorgt für eine elektrische Kontaktierung von Stützring 34 und Tubusring 36, unabhängig von deren Relativposition zueinander. Ein weiterer Schleifkontakt kann zwischen Tubusring 36 und Tubusdeckel 38 vorgesehen sein.

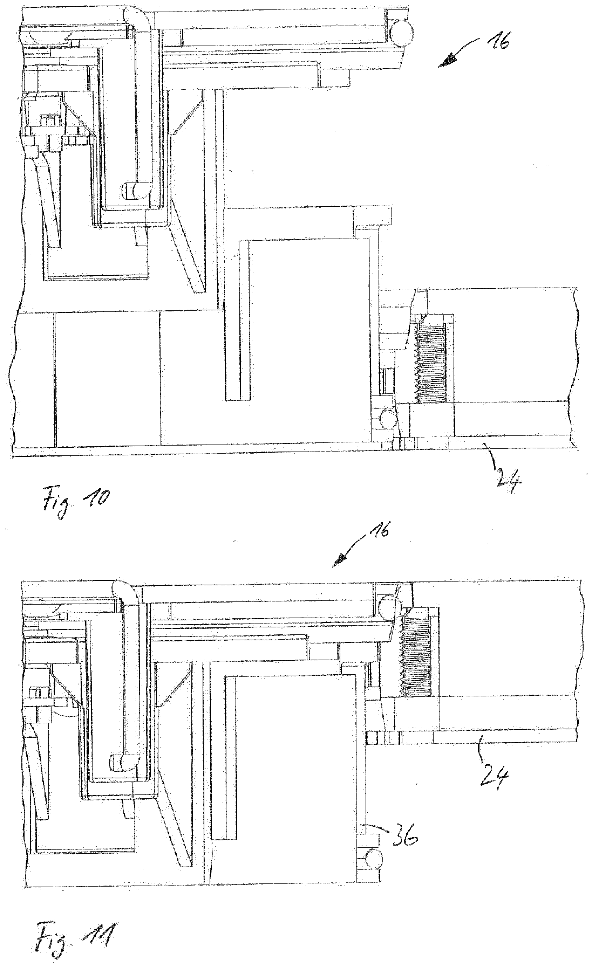

Die Darstellungen der Fig. 10 und 11 zeigen den vollständig ausgezogenen Zustand des Schnurauslasstubus 16 relativ zur Deckelschale 24 bzw. den vollständig eingeschobenen Zustand des Schnurauslasstubus 16. Aufgrund seiner Teleskopierbarkeit ragt in der vollständig eingeschobenen Stellung der Fig. 11 der Schnurauslasstubus 16, bzw. der Tubusring 36 weniger weit über die Unterseite der Deckelschale 24 hinaus, als dies bei einem einstückigen Tubus der Fall wäre. Unterhalb der Deckelschale 24 bleibt dadurch mehr Platz als bei konventionellen Unterflurkassetten, um Installationsgeräte anordnen zu können.

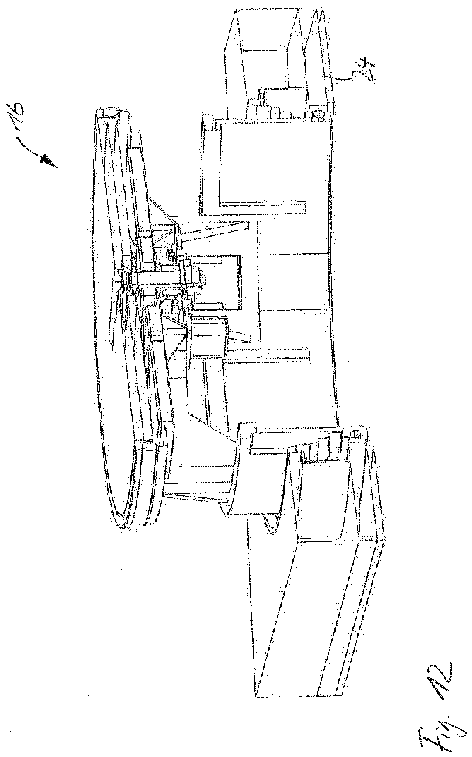

Die Darstellung der Fig. 12 zeigt eine Schnittansicht des Schnurauslasstubus 16 im relativ zur Deckelschale 24 vollständig ausgezogenen Zustand, entsprechend der Darstellung der Fig. 10.

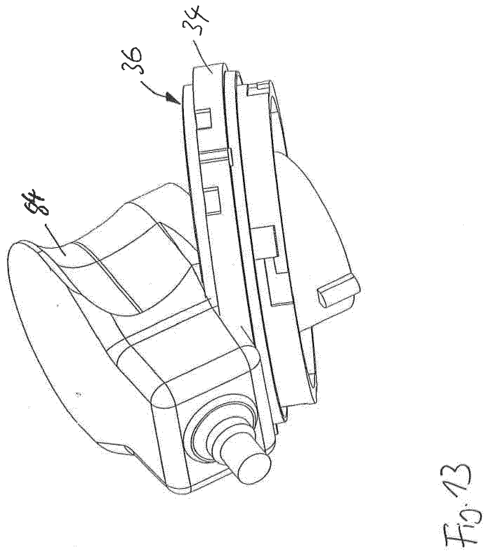

Die Darstellung der Fig. 13 zeigt Stützring 34 und den Tubusring 36 alleine sowie einen Drehstromstecker 84, der durch den Tubusring 36 hindurchgeführt werden kann. Die Darstellung der Fig. 13 dient zur Verdeutlichung. Dadurch, dass der Tubusdeckel 38 vollständig vom Tubusring 36 abgenommen werden kann, steht der vollständige Innenquerschnitt des Tubusrings 36 zum Einführen von Kabelsteckern, beispielsweise dem Drehstromstecker 84, zur Verfügung.

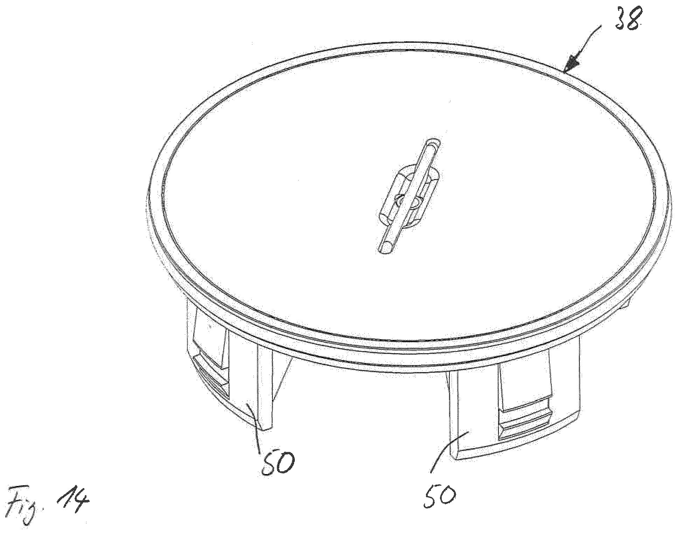

Die Darstellung der Fig. 14 zeigt den Tubusdeckel 38 in einer Ansicht von schräg oben. Zwischen den Führungsarmen 50 ist jeweils ein Zwischenraum vorhanden, der zum Durchführen von Kabeln genutzt werden kann, siehe auch Fig. 3. Kabel können aus der erfindungsgemäßen Unterflurkassette daher in unterschiedlichsten Richtungen ausgeführt werden und beispielsweise können auch gleichzeitig Kabel in unterschiedliche Richtungen ausgeführt werden, indem sie zwischen unterschiedliche Führungsarme 50 gelegt werden.

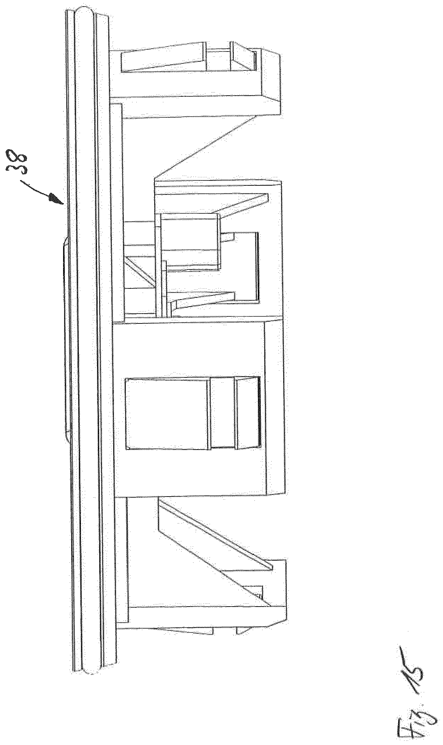

Die Darstellung der Fig. 15 zeigt den Tubusdeckel 38 in einer Seitenansicht.

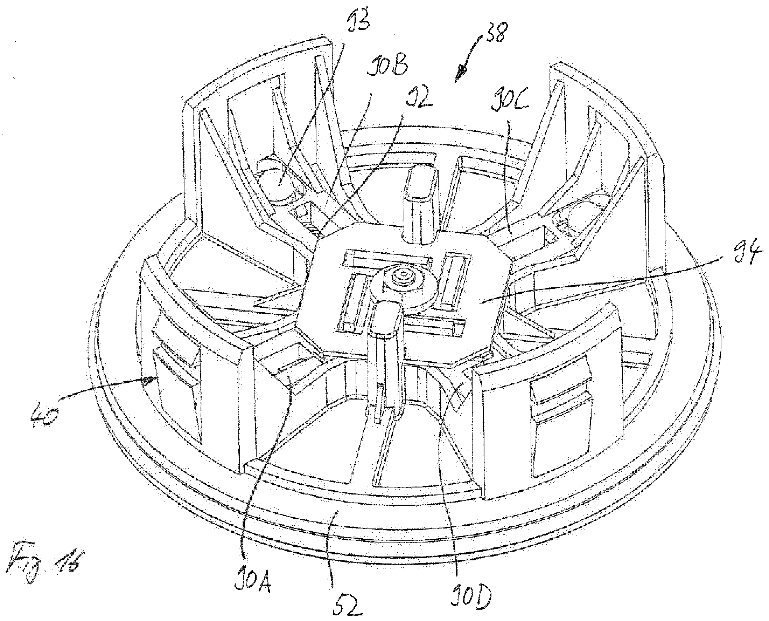

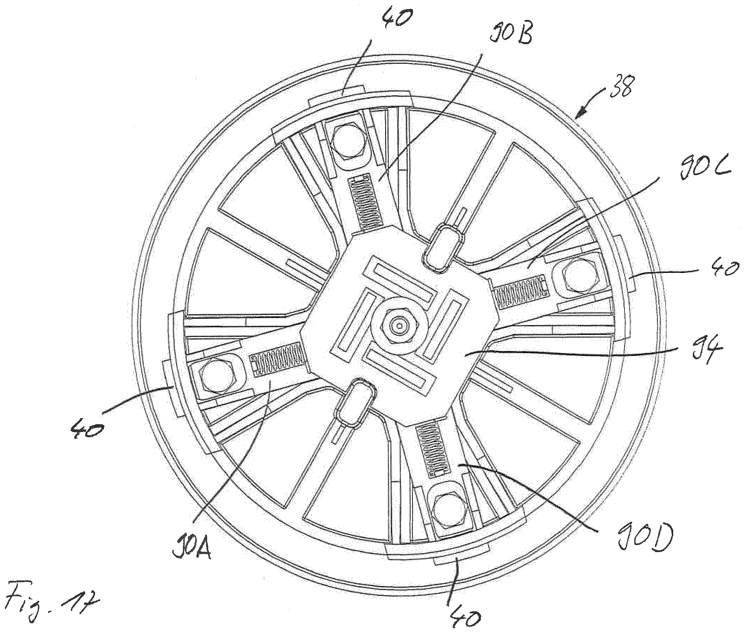

Die Darstellung der Fig. 16 zeigt den Tubusdeckel 38 in einer Ansicht von schräg unten und die Darstellung der Fig. 17 zeigt den Tubusdeckel 38 direkt von unten.

In den Fig.16 und 17 sind jeweils die Rastvorsprünge 40 zu erkennen, die auf einer jeweiligen, radial liegenden Außenseite von Rastarmen 90a, 90b, 90c, 90d angeordnet sind. Die Rastarme 90 sind jeweils mittels Druckfedern 92 radial nach außen vorgespannt und jeweils mittels Führungsbolzen 93 an der Deckelplatte 52 des Tubusdeckels 38 linear verschiebbar angeordnet. Durch eine Verschiebung der Rastarme 90 radial nach innen bzw. außen können die Rastvorsprünge 40, wie erläutert wurde, an den oberen Randabschnitten 60 des Tubusrings 36 verrastet und entrastet werden.

Die Rastarme 90 sind über Anlaufschrägen miteinander gekoppelt, so dass das Eindrücken eines Rastvorsprungs 40 bzw. eines Rastarms 90a radial nach innen gleichzeitig die Bewegung der übrigen Rastarme 90b, 90c, 90d radial nach innen verursacht. Die Anlaufschrägen der Rastarme 90 sind in der Darstellung der Fig. 16 nicht zu erkennen, da sie unterhalb einer Abdeckplatte 94 liegen, die von unten her an die Deckelplatte 52 des Tubusdeckels 38 angesetzt und mittels einer Beilagscheibe und einer Mutter an der Deckelplatte 52 gesichert ist.

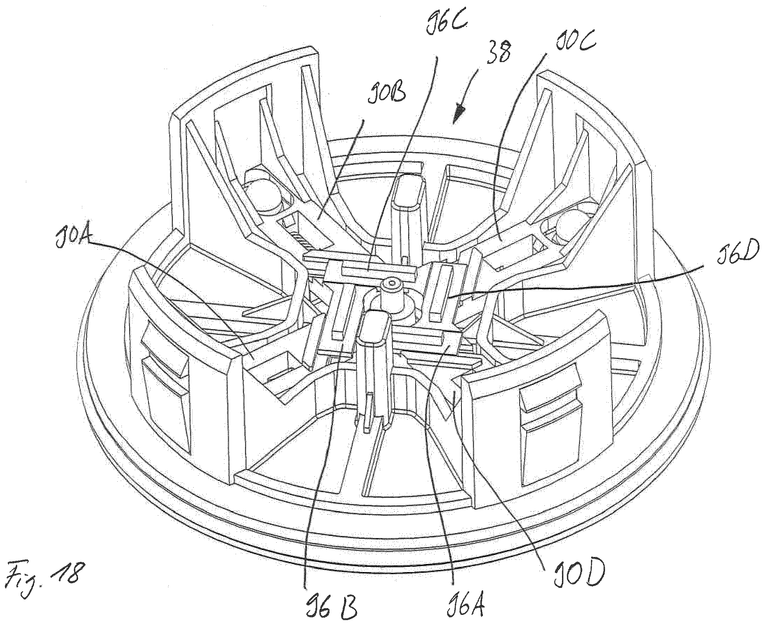

Die Darstellung der Fig. 18 zeigt den Tubusdeckel 38 in der Ansicht der Fig. 16 bei abgenommener Abdeckplatte 94. Zu erkennen ist nun, dass jeder der Rastarme 90 einen Führungsabschnitt 96a, 96b, 96c und 96d aufweist, wobei sich die Führungsabschnitte 96 jeweils in einem Winkel von etwa 45° zum Mittelteil der Rastarme 90 erstrecken. Alle Rastarme 90 sind identisch zueinander ausgebildet.

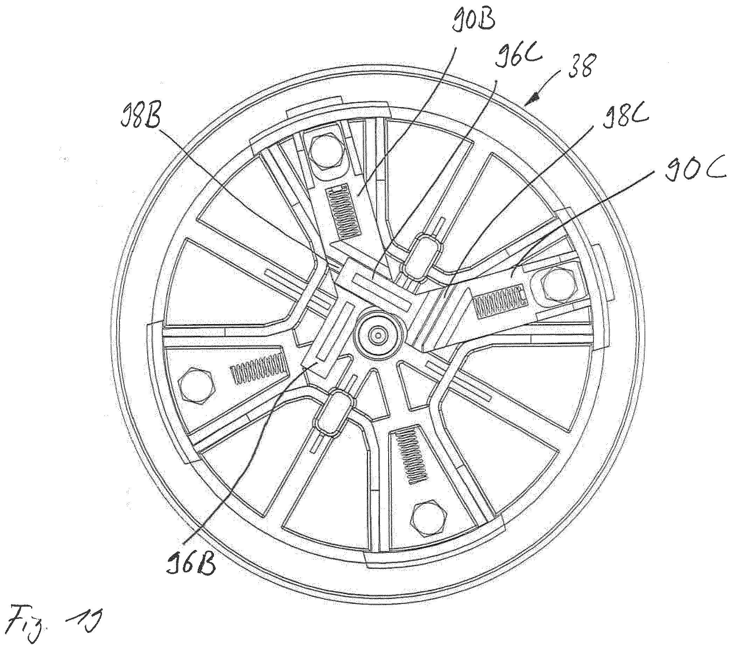

Die Darstellung der Fig. 19 zeigt den Tubusdeckel 38 in der Ansicht der Fig. 17 von unten, wobei die Abdeckplatte 94 und die Rastarme 90a und 90d abgenommen sind. Zu erkennen ist nun, dass der Führungsvorsprung 96c des Rastarms 90c in einer Führung 98b des Rastarmes 90b verschiebbar aufgenommen ist. Der Führungsabschnitt 96c kann sich dadurch lediglich parallel und innerhalb der Führung 98b bewegen. Eine Bewegung des Rastarmes 90c radial nach innen führt dadurch über die Wirkung der Führung 98b als Anlaufschräge für den Führungsvorsprung 96c auch zu einer Bewegung des Rastarmes 90b radial nach innen. Umgekehrt führt eine Bewegung des Rastarmes 90c radial nach außen auch dazu, dass sich der Rastarm 90b gleichzeitig radial nach außen bewegt. Der Führungsabschnitt 96b des Rastarmes 90b ist wiederum in einer Führung im Rastarm 90a gelagert und der Führungsabschnitt 96a, siehe Fig. 18, ist in einer Führung im Rastarm 90d gelagert. Eine Führung 98c im Rastarm 90c nimmt wiederum den Führungsabschnitt 96d, siehe Fig. 18, des Rastarmes 90d auf. Alle vier Rastarme 90a, 90b, 90c, 90d sind dadurch miteinander gekoppelt und eine Bewegung auch nur eines Rastarmes 90 radial nach innen oder außen führt gleichzeitig zu einer entsprechenden Bewegung der übrigen Rastarme 90 radial nach innen oder außen.

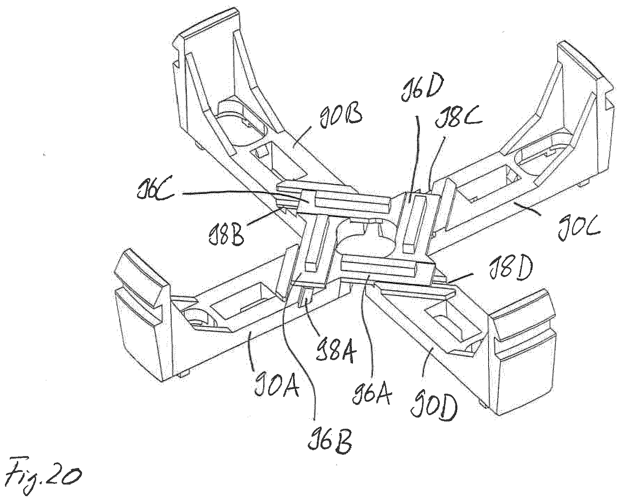

Die Darstellung der Fig. 20 zeigt lediglich die vier Rastarme 90 sowie die jeweiligen Führungsabschnitte 96, die in den Führungen 98 der Rastarme 90 aufgenommen sind und dadurch die Rastarme 90 miteinander koppeln.

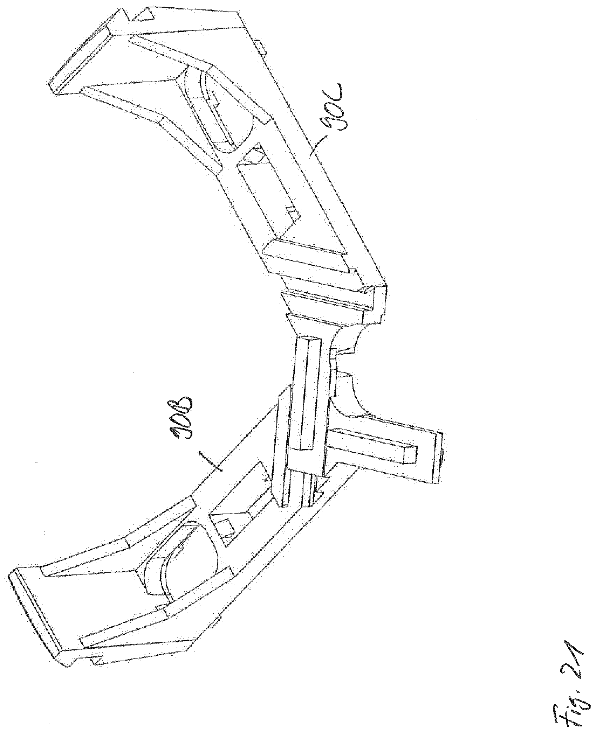

Die Darstellung der Fig. 21 zeigt im Sinne einer Verbesserung der Übersichtlichkeit, lediglich die beiden Rastarme 90b, 90c.

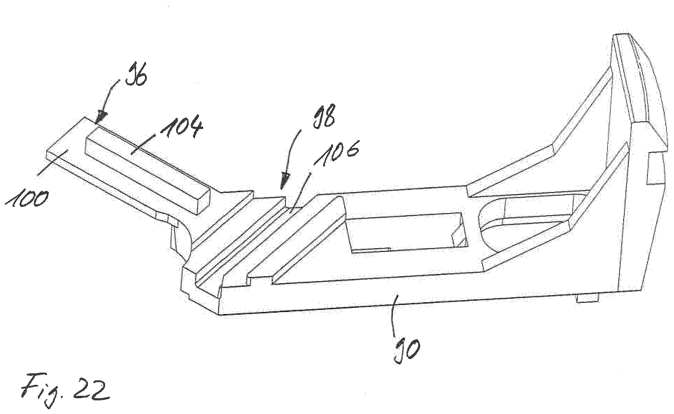

Die Darstellung der Fig. 22 zeigt lediglich einen der vier identisch aufgebauten Rastarme 90 in einer Ansicht von schräg unten, bezogen auf eine Einbaulage im Tubusdeckel 38.

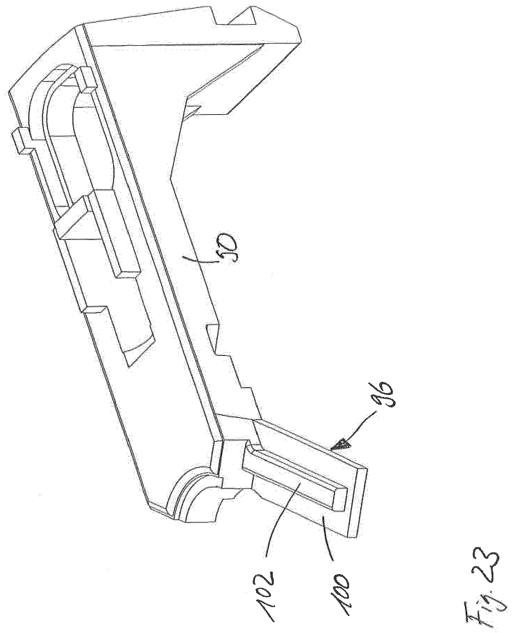

Die Darstellung der Fig. 23 zeigt den Rastarm 90 der Fig. 22 in einer Ansicht von schräg oben. Zu erkennen ist in den Darstellungen der Fig. 22 und 23, dass die Führungsabschnitte 96 jeweils eine Führungsplatte 100 sowie mittig zur Führungsplatte 100 angeordnete leistenförmige Führungsvorsprünge 102, 104 aufweisen. Bezogen auf eine Einbaulage des Rastarms 90 im Tubusdeckel 38 ragt die Führungsleiste 102 nach oben ab und greift in eine jeweilige Führungsnut 106 in der Führung 98 eines benachbarten Rastarmes 90 ein. Die Führungsleiste 104 ragt bezogen auf eine Einbaulage des Tubusdeckels nach unten ab und ist dafür vorgesehen, siehe Fig. 16, in rechteckförmige Ausnehmungen der Abdeckplatte 94 einzugreifen. Die Ausnehmungen in der Abdeckplatte 94 sind dabei aber so groß, dass die Führungsleisten 104 nicht an den Rand dieser Ausnehmungen anstoßen. Die Führungsleisten 104 dienen zusammen mit der Abdeckplatte 94 daher lediglich dazu, die Rastarme 90 unverlierbar am Tubusdeckel 38 zu halten.

## Patentansprüche

1. Unterflurkassette für elektrische Installationsgeräte mit einem Schnurauslasstubus (16) in einem Deckel (14) der Unterflurkassette (10), wobei der Schnurauslasstubus (16) in einer Richtung senkrecht zu einer Oberfläche des Deckels (14) relativ zum Deckel (14) ausgezogen und eingeschoben werden kann, wobei der Schnurauslasstubus (16) teleskopierbar ist und wenigstens einen verschiebbar am Deckel (14) angeordneten Tubusring (36) und einen verschiebbar am Tubusring (36) angeordneten Tubusdeckel (38) aufweist, wobei der Tubusdeckel (38) mehrere, sich von einer Deckelfläche in Richtung auf den Tubusring (36) erstreckende Vorsprünge (50) aufweist, wobei zwischen den Vorsprüngen (50) wenigstens eine Schnurauslassöffnung definiert ist und der Tubusdeckel (38) mittels der Vorsprünge (50) verschiebbar am Tubusring (36) angeordnet ist, **dadurch gekennzeichnet, dass** der Tubusdeckel (38) Rastmittel aufweist, die in der vollständig ausgezogenen Stellung des Tubusdeckels (38) den Tubusdeckel (38) am Tubusring (36) verrasten, wobei die Vorsprünge (50) vier Führungsarme sind, die sich ausgehend von einer Deckplatte (52) des Tubusdeckels (38) senkrecht nach unten erstrecken und den Tubusdeckel (38) an dem Tubusring (36) führen, und wobei die Rastmittel vier relativ zu den Führungsarmen (50) radial nach außen bzw. innen verlagerbare Rastvorsprünge (40) sind, die jeweils durch Fenster in Führungsarmen (50) hindurchragen und die in der vollständig ausgezogenen Stellung des Tubusdeckels (38) diesen am oberen Rand des Tubusrings (36) in seiner Endstellung verrasten.

2. Unterflurkassette nach Anspruch 1, **dadurch gekennzeichnet, dass** der Tubusdeckel (38) werkzeuglos abnehmbar am Tubusring (36) angeordnet ist.

3. Unterflurkassette nach einem der vorstehenden Ansprüche, **dadurch gekennzeichnet, dass** der Tubusring (36) wenigstens in seiner vollständig ausgezogenen Stellung mittels Rastmitteln relativ zum Deckel (14) festlegbar ist.

4. Unterflurkassette nach einem der vorstehenden Ansprüche, **dadurch gekennzeichnet, dass** ein am Deckel (14) festgelegter Stützring (34) vorgesehen ist, an dem der Tubusring (36) verschiebbar angeordnet ist.

5. Unterflurkassette nach Anspruch 4, **dadurch gekennzeichnet, dass** wenigstens ein Distanzring vorgesehen ist, wobei der wenigsten eine Distanzring zwischen Deckel (14) und Stützring (34) angeordnet ist.

6. Unterflurkassette nach einem der vorstehenden Ansprüche, **dadurch gekennzeichnet, dass** zwischen dem Stützring (34) und dem Tubusring (36) und/oder zwischen dem Tubusring (36) und dem Tubusdeckel (38) jeweils ein elektrischer Schleifkontakt vorgesehen ist.

7. Unterflurkassette nach einem der vorstehenden Ansprüche, **dadurch gekennzeichnet, dass** am Tubusdeckel (38) oder am Tubusring (36) eine umlaufende Dichtung (42) vorgesehen ist, die wenigstens im vollständig eingeschobenen Zustand des Tubusdeckels (38) eine Abdichtung zwischen Tubusdeckel (38) und Tubusring (36) bewirkt.

8. Unterflurkassette nach einem der vorstehenden Ansprüche, **dadurch gekennzeichnet, dass** am Tubusring (36) oder am Stützring (34) eine umlaufende Dichtung (44) vorgesehen ist, die wenigstens im vollständig ausgezogenen Zustand des Tubusrings (36) eine Abdichtung zwischen Stützring (34) und Tubusring (36) bewirkt.

9. Unterflurkassette nach Anspruch 7 oder 8, **dadurch gekennzeichnet, dass** die umlaufende Dichtung (42) in einer kegelförmigen Fläche des Tubusdeckels (38), des Tubusrings (36) oder des Stützrings (34) angeordnet ist.

## Claims

1. Under-floor box for electric installation devices having a cord outlet tube (16) in a cover (14) of the under-floor box (10), wherein the cord outlet tube (16) can be drawn out and pushed in relative to the cover (14) in a direction perpendicular to a surface of the cover (14), wherein the cord outlet tube (16) is telescopic and includes at least one tube ring (36) slidably disposed on the cover (14) and a tube cover (38) slidably disposed on the tube ring (36), wherein the tube cover (38) includes a plurality of projections (50) extending from a cover surface in the direction towards the tube ring (36), wherein between the projections (50) at least one cord outlet opening is defined and the tube cover (38) is slidably disposed on the tube ring (36) by means of the projections (50), **characterized in that** the tube cover (38) has latching means to snap-lock the tube cover (38) on the tube ring (36) in the completely drawn-out position of the tube cover (38), wherein the projections (50) are four guide arms which extend vertically downwards from a cover plate (52) of the tube cover (38) and guide the tube cover (38) on the tube ring (36), and wherein the latching means are four snap projections (40) which are displacable radially outwards or inwards relative to the guide arms (50), respectively protrude through apertures in guide arms (50) and, in the completely drawn-out position of the tube cover (38), snap-lock the latter on the upper edge of the tube ring (36) in the end position thereof.

2. Under-floor box according to claim 1, **characterized in that** the tube cover (38) is disposed on the tube ring (36) to be removable without a tool.

3. Under-floor box according to any one of the preceding claims, **characterized in that** the tube ring (36), at least in the completely drawn-out position thereof, can be fixed relative to the cover (14) by latching means.

4. Under-floor box according to any one of the preceding claims, **characterized in that** a support ring (34) is provided and fixed to the cover (14), with the tube ring (36) slidably disposed on the support ring.

5. Under-floor box according to claim 4, **characterized in that** at least one spacer ring is provided, wherein the at least one spacer ring is interposed between cover (14) and support ring (34).

6. Under-floor box according to any one of the preceding claims, **characterized in that** between the support ring (34) and the tube ring (36) and/or between the tube ring (36) and the tube cover (38) a respective electrical sliding contact is provided.

7. Under-floor box according to any one of the preceding claims, **characterized in that** a circumferential seal (42) is provided on the tube cover (38) or on the tube ring (36), which seal causes, at least in the completely pushed-in condition of the tube cover (38), sealing between tube cover (38) and tube ring (36).

8. Under-floor box according to any one of the preceding claims, **characterized in that** a circumferential seal (44) is provided on the tube ring (36) or on the support ring (34), which seal causes, at least in the completely drawn-out condition of the tube ring (36), sealing between support ring (34) and tube ring (36).

9. Under-floor box according to claim 7 or 8, **characterized in that** the circumferential seal (42) is disposed in a conical surface of the tube cover (38), the tube ring (36), or the support ring (34).

## Revendications

1. Cassette souterraine pour appareils d'installation électriques, comprenant un tube de sortie de cordon (16) dans un couvercle (14) de la cassette souterraine (10), le tube de sortie de cordon (16) pouvant être sorti et enfoncé par rapport au couvercle (14) dans une direction perpendiculaire à une surface du couvercle (14), le tube de sortie de cordon (16) étant télescopable et présentant au moins une bague de tube (36) disposée de manière déplaçable sur le couvercle (14) et un couvercle de tube (38) disposé de manière déplaçable sur la bague de tube (36), le couvercle de tube (38) présentant plusieurs saillies (50) s'étendant depuis une surface de couvercle dans la direction de la bague de tube (36), au moins une ouverture de sortie de cordon étant définie entre les saillies (50) et le couvercle de tube (38) étant disposé de manière déplaçable sur la bague de tube (36) au moyen des saillies (50), **caractérisée en ce que** le couvercle de tube (38) présente des moyens d'encliquetage qui, dans la position complètement sortie du couvercle de tube (38), encliquètent le couvercle de tube (38) sur la bague de tube (36), les saillies (50) étant quatre bras de guidage qui s'étendent perpendiculairement vers le bas à partir d'une plaque de recouvrement (52) du couvercle de tube (38) et guident le couvercle de tube (38) sur la bague de tube (36) et les moyens d'encliquetage étant quatre saillies d'encliquetage (40) déplaçables radialement vers l'extérieur ou vers l'intérieur par rapport au bras de guidage (50), lesquelles pénètrent à travers des fenêtres respectives dans les bras de guidage (50) et, dans la position complètement sortie du couvercle de tube (38), encliquètent ce dernier au bord supérieur de la bague de tube (36) dans sa position finale.

2. Cassette souterraine selon la revendication 1, **caractérisée en ce que** le couvercle de tube (38) est disposé de manière à pouvoir être enlevé sans outil sur la bague de tube (36).

3. Cassette souterraine selon l'une quelconque des revendications précédentes, **caractérisée en ce que** la bague de tube (36), au moins dans sa position complètement sortie, peut être fixée par rapport au couvercle (14) au moyen de moyens d'encliquetage.

4. Cassette souterraine selon l'une quelconque des revendications précédentes, **caractérisée en ce qu'**il est prévu une bague de support (34) fixée au couvercle (14), sur laquelle la bague de tube (36) est disposée de manière déplaçable.

5. Cassette souterraine selon la revendication 4, **caractérisée en ce qu'**au moins une bague d'espacement est prévue, l'au moins une bague d'espacement étant disposée entre le couvercle (14) et la bague de support (34).

6. Cassette souterraine selon l'une quelconque des revendications précédentes, **caractérisée en ce qu'**entre la bague de support (34) et la bague de tube (36) et/ou entre la bague de tube (36) et le couvercle de tube (38) est à chaque fois prévu un contact glissant électrique.

7. Cassette souterraine selon l'une quelconque des revendications précédentes, **caractérisée en ce qu'**un joint d'étanchéité périphérique (42) est prévu sur le couvercle de tube (38) ou sur la bague de tube (36), lequel, au moins dans l'état complètement rentré du couvercle de tube (38), réalise une étanchéité entre le couvercle de tube (38) et la bague de tube (36).

8. Cassette souterraine selon l'une quelconque des revendications précédentes, **caractérisée en ce qu'**un joint d'étanchéité périphérique (44) est prévu sur la bague de tube (36) ou sur la bague de support (34), lequel, au moins dans l'état complètement sorti de la bague de tube (36), réalise l'étanchéité entre la bague de support (34) et la bague de tube (36).

9. Cassette souterraine selon la revendication 7 ou 8, **caractérisée en ce que** le joint d'étanchéité périphérique (42) est disposé dans une surface conique du couvercle de tube (38), de la bague de tube (36) ou de la bague de support (34).
